Europäisches Patentamt

European Patent Office

Office européen des brevets

(19)

(11) Numéro de publication : **0 017 301**
**B1**

(12) **FASCICULE DE BREVET EUROPÉEN**

(45) Date de publication du fascicule du brevet :
15.12.82

(51) Int. Cl.³ : **H 04 L 27/12**

(21) Numéro de dépôt : **80200301.2**

(22) Date de dépôt : **31.03.80**

(54) Modulateur à déplacement de fréquence.

(30) Priorité : **06.04.79 FR 7908725**

(43) Date de publication de la demande :
**15.10.80 (Bulletin 80/21)**

(45) Mention de la délivrance du brevet :
**15.12.82 Bulletin 82/50**

(84) Etats contractants désignés :
**BE CH DE FR GB IT NL SE**

(56) Documents cités :
**DE A 2 325 393**
**DE A 2 601 572**
**US A 4 039 952**

**ELECTRONICS AND COMMUNICATIONS IN JAPAN, vol. 57-A, no. 2, 1974, Washington US S. SHIMADA « FS Modulator suitable for hybrid IC », pages 29-38.**

(73) Titulaire : **TELECOMMUNICATIONS RADIOELECTRI-QUES ET TELEPHONIQUES T. R. T.**
**88, rue Brillat Savarin**
**F-75013 Paris (FR)**

(72) Inventeur : **Boudault, Robert**
**Société Civile S.P.I.D. 209 rue de l'Université**
**F-75007 Paris (FR)**
Inventeur : **Pouzoullic, Gérard Société Civile S.P.I.D.**
**209 rue de l'Université**
**F-75007 Paris (FR)**

(74) Mandataire : **Tissot, Jean et al**
**Société Civile S.P.I.D. 209, rue de l'Université**
**F-75007 Paris (FR)**

Jouve, 18, rue St-Denis, 75001 Paris, France

EP 0 017 301 B1

## Modulateur à déplacement de fréquence

L'invention concerne un modulateur destiné à transmettre des données par déplacement de fréquence et comportant un amplificateur opérationnel monté avec un condensateur pour former un circuit intégrateur dont la sortie est connectée à une bascule à seuil avec hystérésis fournissant une tension bivalente qui est appliquée à une borne d'une première résistance dont l'autre borne est à relier à une entrée dudit amplificateur opérationnel de façon à former à la sortie de ce dernier une tension triangulaire, des moyens logiques étant prévus pour appliquer à une borne d'une deuxième résistance dont l'autre borne est commune avec celle de la première résistance, une tension égale ou complémentaire à ladite tension bivalente, selon la valeur du signal de données.

Un modulateur de ce genre peut être utilisé par exemple pour réaliser des modems à 200 bauds normalisés par le CCITT. Ces modems comportent un modulateur pour transmettre des données sur une voie dite haute en utilisant les fréquences $F_1 = 1\,750\text{ Hz} + 100\text{ Hz}$ et $F_2 = 1\,750\text{ Hz} - 100\text{ Hz}$, et un modulateur pour transmettre des données sur une voie dite basse en utilisant les fréquences $F'_1 = 1\,080\text{ Hz} + 100\text{ Hz}$ et $F'_2 = 1\,080\text{ Hz} - 100\text{ Hz}$. Les fréquences $F_0 = 1\,750\text{ Hz}$ et $F'_0 = 1\,080\text{ Hz}$ sont appelées par la suite les fréquences centrales des voies haute et basse.

Le brevet américain n° 4 039 952 décrit un modulateur du genre décrit dans le préambule, permettant d'obtenir un signal de forme triangulaire dont la fréquence est déplacée en fonction de données. Mais ce brevet n'envisage pas le cas, tel que celui d'un modem normalisé à 200 bauds, où l'on veut transmettre des données par deux voies, avec le même déplacement de fréquence autour de deux fréquences centrales différentes. L'idéal dans ce cas, est de réaliser un modulateur universel permettant de passer d'un modulateur pour voie haute à un modulateur pour voie basse et inversement, sans réglage, par une commutation très simple.

La présente invention vis à fournir un tel modulateur universel ne nécessitant pas de réglages compliqués en fabrication et permettant d'engendrer par simple commutation, soit un signal modulé par déplacement de fréquence autour d'une fréquence centrale, soit un autre signal modulé par le même déplacement de fréquence autour d'une autre fréquence centrale. L'invention a pour but également de fournir les moyens permettant d'obtenir une très grande stabilité des différentes fréquences fournies par le modulateur, vis-à-vis de la tension d'alimentation et de la température.

Conformément à l'invention, pour engendrer un premier ou un deuxième signal modulés avec le même déplacement de fréquence et ayant des fréquences centrales différentes, le modulateur envisagé dans le préambule comporte d'autres moyens logiques pour appliquer à une borne d'une troisième résistance dont l'autre borne est commune avec celles de la première et de la deuxième résistances, une tension égale ou complémentaire à ladite tension bivalente, selon que le signal modulé désiré est le premier ou le deuxième signal, une résistance commune étant insérée entre la borne commune des trois résistances précitées et ladite entrée de l'amplificateur opérationnel.

La description suivante en regard des dessins annexés, le tout donné à titre d'exemple, fera bien comprendre comment l'invention peut être réalisée.

La figure 1 représente un schéma du modulateur de l'invention.

La figure 2 est un schéma de l'oscillateur de base utilisé dans le modulateur de l'invention.

Sur la figure 3, le diagramme 3a le diagramme 3a représente la tension à l'entrée de la bascule à seuil, le diagramme 3b représente la tension bivalente à la sortie de cette bascule et le diagramme 3c représente la tension triangulaire à la sortie du circuit intégrateur.

La figure 4 représente le réseau de résistances connecté à l'entrée du circuit intégrateur dans le modulateur de l'invention et les tensions qui sont appliquées à ce réseau.

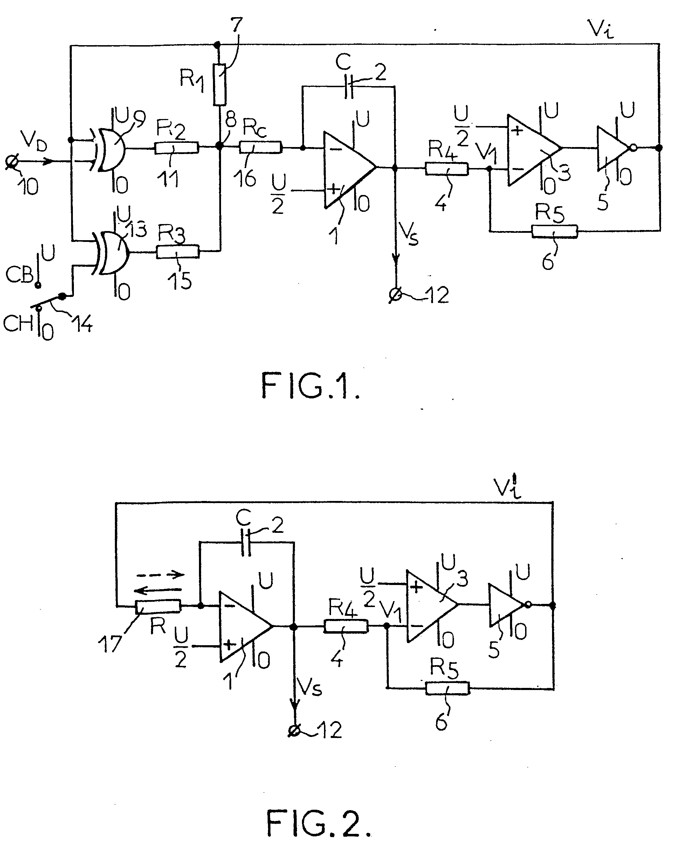

Le modulateur de l'invention représenté sur la figure 1 comporte un circuit intégrateur formé par un amplificateur opérationnel 1, par un condensateur 2 de capacité C connecté entre l'entrée inverseuse et la sortie de l'amplificateur 1 et enfin par un réseau de résistances branché à ladite entrée inverseuse et que l'on décrira par la suite. L'amplificateur opérationnel 1 est alimenté par une source de tension U et son entrée non inverseuse est portée au potentiel U/2.

La sortie de l'amplificateur opérationnel 1 est reliée par l'intermédiaire d'une résistance 4 de valeur $R_4$, à l'entrée inverseuse d'un amplificateur opérationnel 3 formant un circuit comparateur. Ce circuit comparateur 3 est également alimenté par la source de tension U et son entrée non inverseuse est portée au potentiel U/2. La sortie du circuit comparateur 3 est reliée à un circuit inverseur 5 qui est aussi alimenté par la tension U. Sa sortie est reliée à l'entrée inverseuse du circuit comparateur 3 à travers la résistance 6 de valeur $R_5$. On obtient à la sortie du circuit inverseur 5 une tension bivalente $V_i$ qui passe de la valeur O à la valeur U quand la tension $V_1$ sur l'entrée inverseuse du circuit comparateur 3 devient juste plus grande que la tension U/2 et qui passe de la valeur U à la valeur O quand la tension $V_1$ devient juste plus faible que la tension U/2. Ce fonctionnement de bascule à seuil se produit avec une certaine hystérésis du fait que, quand la tension de sortie $V_i$ du circuit inverseur 5 passe de O à U, la tension $V_1$ à l'entrée inverseuse du circuit comparateur 3 monte brusquement de la valeur U/2 à une valeur plus grande que U/2 et quand la tension $V_i$ passe de U à O, la

tension $V_1$ tombe brusquement de la valeur U/2 à une valeur plus faible que U/2. Ce fonctionnement est analogue à celui du montage connu sous le nom de bascule de Schmidt.

La tension bivalente $V_i$ est appliquée à une borne d'une résistance 7 de valeur $R_1$, dont l'autre borne 8 est à relier à l'entrée inverseuse de l'amplificateur opérationnel 1.

La tension bivalente $V_i$ est également appliquée à une entrée du circuit OU exclusif 9 dont l'autre entrée reçoit le signal de données à transmettre sous forme d'un signal binaire $V_D$ apparaissant sur la borne 10 et pouvant prendre les valeurs O ou U. A la sortie du circuit OU exclusif 9, on obtient une tension égale à la tension bivalente $V_i$ quand le signal binaire de données vaut O et une tension $\overline{V_i}$, complémentaire de la tension $V_i$ quand le signal binaire de données vaut U. La tension $V_i$ ou $\overline{V_i}$ obtenue à la sortie du circuit OU exclusif 9 est appliquée à une borne de la résistance 11 de valeur $R_2$ dont l'autre borne est reliée à la borne 8. La borne commune 8 entre les résistances 7 et 11 est, d'après l'art antérieur constitué par le brevet américain n° 4 039 952, directement reliée · à l'entrée inverseuse de l'amplificateur opérationnel 1. On obtient ainsi sur la borne 12 reliée à la sortie de l'amplificateur opérationnel 1 une tension $V_s$ de forme triangulaire dont la fréquence peut prendre deux valeurs selon la valeur du signal binaire de données appliqué sur la borne 10. Le dispositif décrit jusqu'à présent peut donc servir de modulateur par déplacement de fréquence. Par exemple pour le modem normalisé à 200 bauds, on doit utiliser suivant cette technique deux dispositifs différents, réglés chacun pour réaliser le modulateur voie haute et le modulateur voie basse.

La présente invention permet au contraire de réaliser un modulateur universel qui puisse en exploitation être affecté soit à la voie haute, soit à la voie basse, par une commutation très simple réalisable par fil amovible (Strap en anglais) ou par un circuit commutateur. En outre la présente invention permet de pallier des inconvénients du modulateur de l'art antérieur, concernant la stabilité des fréquences.

Pour réaliser un modulateur universel selon la présente invention, on utilise un circuit OU exclusif 13, dont une entrée reçoit la tension bivalente $V_i$ et dont l'autre entrée reçoit, par l'intermédiaire du circuit commutateur 14, la tension O quand ce commutateur est sur la position CH et la tension U quand ce commutateur est sur la position CB. A la sortie du circuit OU exclusif 13 il apparaît suivant la position du circuit commutateur 14, la tension $V_i$ ou $\overline{V_i}$ qui est appliquée à une borne de la résistance 15 de valeur $R_3$, dont l'autre borne est reliée à la borne commune 8. En outre, comme on le montrera par la suite, on améliore la stabilité des fréquences avec la température, en insérant entre la borne 8 commune aux résistances 7, 11 et 15 et l'entrée inverseuse de l'amplificateur opérationnel 1 une résistance 16 de valeur $R_c$.

On expliquera en détail par la suite comment on peut déterminer les valeurs des différents éléments du montage, capacité C, résistances $R_1$ à $R_5$ et $R_c$, pour obtenir selon la position du circuit commutateur 14, soit le signal de la voie haute modulé par des données, soit le signal de la voie basse modulé par des données.

Les autres mesures prises pour améliorer la stabilité des fréquences sont les suivantes. Tous les circuits utilisés sont réalisés en technologie CMOS ; comme on le sait, la résistance de sortie des circuits réalisés dans cette technologie CMOS est faible et il en résulte notamment que les variations inévitables avec la température des résistances de sortie du circuit inverseur 5 et des circuits OU exclusif 9 et 13 sont négligeables vis-à-vis des résistances connectées à leur sortie. Le circuit inverseur 5 et les circuits OU exclusif 9 et 13 réalisés dans la technologie CMOS, se comportent finalement comme des commutateurs quasi-parfaits ayant une tension de déchet pratiquement nulle et qui, en fonction des signaux appliqués à leur entrée, fournissent donc pratiquement soit la tension O, soit la tension U d'alimentation. On remarquera enfin que dans le montage du modulateur universel de la figure 1, les circuits sont alimentés par une seule tension U ; la tension de référence U/2 appliquée aux entrée non inverseuses des amplificateurs opérationnels peut être obtenue par un pont diviseur de sorte que finalement le modulateur universel de l'invention ne nécessite qu'une seule source d'alimentation, ce qui, outre un avantage de simplicité, contribue à la stabilité des fréquences vis-à-vis de la tension d'alimentation.

En vue de décrire le fonctionnement détaillé du modulateur de l'invention de la figure 1 on va d'abord expliquer le fonctionnement de l'oscillateur de base utilisé dans ce modulateur. Cet oscillateur de base représenté sur la figure 2 comporte certains éléments de la figure 1 munis des mêmes références, c'est-à-dire l'amplificateur opérationnel 1 muni du condensateur 2 et le circuit comparateur 3 qui, avec le circuit inverseur 5, est muni des résistances 4 et 6. Dans cet oscillateur de base, la tension bivalente $V_i$ obtenue à la sortie du circuit inverseur 5 est appliquée à une borne d'une seule résistance 17 de valeur R, dont l'autre borne est reliée à l'entrée inverseuse de l'amplificateur opérationnel 1.

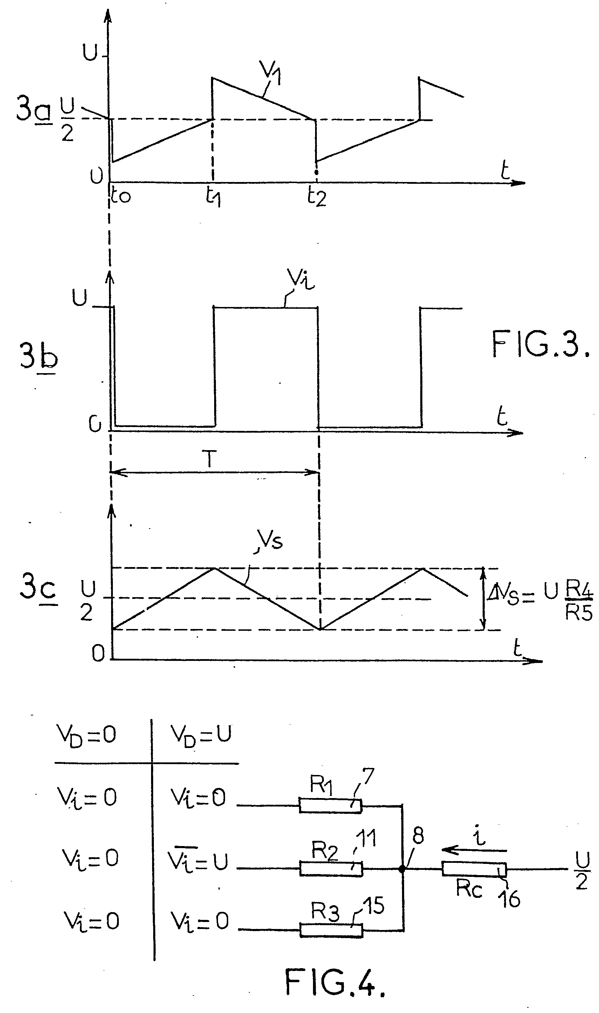

Le fonctionnement de l'oscillateur de base est illustré par les diagrammes de la figure 3. Le diagramme 3a représente la tension $V_1$ à l'entrée inverseuse du circuit comparateur 3. Le diagramme 3b représente la tension bivalente $V_i$ à la sortie du circuit inverseur 5 et le diagramme 3c représente la tension de sortie $V_s$ de l'oscillateur, prise à la sortie de l'amplificateur opérationnel 1. On se place d'abord juste avant l'instant $t_0$ où la tension $V_1$ décroissante atteint la tension U/2 appliquée à l'entrée non inverseuse du circuit comparateur 3. La tension $V_i$ vaut alors U. Le courant dans la résistance 6 vaut donc $(U - U/2) 1/R_5 = U/2R_5$. Comme le courant dans la résistance 4 est le même que celui dans la résistance 6, on en déduit que la tension de sortie

$V_S$ a la valeur $V_{SM}$ telle que :

$$V_{Sm} = \frac{U}{2}(1 - \frac{R_4}{R_5})$$

A l'instant $t_0$, le circuit comparateur 3 bascule, le circuit inverseur 5 fournit la tension $V_i = O$ et la tension $V_1$ descend brusquement à une valeur inférieure à U/2 dépendant du rapport $R_4/R_5$. Comme la tension sur l'entrée non inverseuse de l'amplificateur opérationnel 1 dont on suppose le gain infini, est égale à U/2, le courant dans la résistance 17 vaut U/2R et circule dans le sens indiqué par la flèche en trait plein. La tension de sortie $V_s$ croît alors linéairement avec la pente U/2RC.

La tension $V_1$ croît également linéairement et on peut montrer aisément que juste *avant* l'instant $t_1$ où elle atteint la tension de référence U/2 appliquée à l'entrée non inverseuse du circuit comparateur 3, la tension de sortie $V_S$ atteint la valeur $V_{SM}$ telle que :

$$V_{SM} = \frac{U}{2}(1 + \frac{R_4}{R_5}).$$

A l'instant $t_1$, le circuit comparateur 3 bascule, le circuit inverseur 5 fournit la tension $V_i = U$ et la tension $V_1$ monte brusquement à une valeur supérieure à U/2. Le courant dans la résistance R s'inverse alors et circule dans le sens de la flèche en trait pointillé, tout en gardant l'amplitude U/2R. La tension de sortie $V_s$ décroît linéairement avec la pente $- U/2RC$.

A l'instant $t_2$, le fonctionnement est identique à celui que l'on a expliqué pour l'instant $t_0$.

Il est commode pour la suite d'exprimer la fréquence F = 1/T de la tension de sortie $V_s$ du modulateur, en fonction de l'amplitude i du courant traversant la résistance R pour charger ou décharger la capacité C. En appelant p la valeur absolue de la pente de la tension de sortie $V_s$, on peut écrire p = i/C. D'autre part, en appelant $\Delta V_S$ l'amplitude crête à crête de la tension de sortie $V_s$, on voit aisément d'après le diagramme 3c que

$$p = \frac{\Delta V_S}{1/2}, \text{ avec } \Delta V_S = V_{SM} - V_{SM} = U \cdot \frac{R_4}{R_5}$$

On en déduit que :

$$F = i \cdot \frac{1}{U} \cdot \frac{1}{2C} \cdot \frac{R_4}{R_5}. \qquad (1)$$

Dans le cas du montage de base de la figure 2, i = U/2R comme on l'a montré ci-dessus, donc :

$$F = \frac{1}{4RC} \cdot \frac{R_5}{R_4}. \qquad (2)$$

Dans le cas du modulateur de l'invention de la figure 1, la formule (1) ci-dessus est valable, i étant l'amplitude du courant traversant la résistance commune $R_c$ pour charger ou décharger la capacité C. Cette valeur i est à déterminer dans chaque circonstance en fonction de la valeur du signal de données $V_D$ et en fonction de la position du circuit commutateur 14.

On suppose par exemple que le circuit commutateur 14 est sur la position CH afin d'obtenir en fonction du signal de données $V_d$, les deux fréquences $F_1$ et $F_2$ de la voie haute. Le courant i s'obtient aisément en examinant le schéma de la figure 4 qui montre le réseau de résistances 7, 11, 15, 16 branchées entre elles comme sur la figure 1. Une extrémité de la résistance 16 qui est parcourue par le courant i est toujours à une tension pratiquement égale à U/2, si l'on suppose que le gain de l'amplificateur opérationnel 1 est infini. Les extrémités des résistances 7, 11, 15, non reliées à la résistance 16 suivent les valeurs de la tension bivalente $V_i$ quand la tension $V_D$ correspondant aux données est telle que $V_D = O$ et suivent respectivement les valeurs de tension $V_i$, $\overline{V_i}$, $V_i$, quand $V_D = U$. En prenant par exemple $V_i = O$ ce qui correspond à une tension de sortie $V_S$ croissante, on obtient aux extrémités précitées des résistances 7, 11, 15 les valeurs indiquées sur la figure 4, respectivement pour $V_D = O$ et $V_D = U$.

Un calcul usuel montre que l'amplitude du courant i traversant la résistance $R_c$ prend, respectivement pour $V_D = O$ et $V_D = U$, les valeurs $i_1$ et $i_2$ telles que :

$$i_1 = \frac{U}{2}\frac{\frac{1}{R_1} + \frac{1}{R_2} + \frac{1}{R_3}}{1 + R_c(\frac{1}{R_1} + \frac{1}{R_2} + \frac{1}{R_3})},$$

$$i_2 = \frac{U}{2}\frac{\frac{1}{R_1} - \frac{1}{R_2} + \frac{1}{R_3}}{1 + R_c(\frac{1}{R_1} + \frac{1}{R_2} + \frac{1}{R_3})}.$$

En reportant ces valeurs de $i_1$ et $i_2$ dans la formule (1) on obtient les deux fréquences $F_1$ et $F_2$ fournies par le modulateur de l'invention pour la voie haute.

$$F_1 = \frac{1}{4C} \cdot \frac{R_5}{R_4} \frac{\frac{1}{R_1} + \frac{1}{R_2} + \frac{1}{R_3}}{1 + R_c(\frac{1}{R_1} + \frac{1}{R_2} + \frac{1}{R_3})}$$

$$(3)$$

$$F_2 = \frac{1}{4C} \cdot \frac{R_5}{R_4} \frac{\frac{1}{R_1} - \frac{1}{R_2} + \frac{1}{R_3}}{1 + R_c(\frac{1}{R_1} + \frac{1}{R_2} + \frac{1}{R_3})}$$

Pour obtenir en fonction du signal de données $V_D$ les deux fréquences $F'_1$ et $F'_2$ de la voie basse, le circuit commutateur 14 est établi sur la position CB. On peut montrer de la même manière que ci-dessus que ces deux fréquences sont données par les formules :

$$F'_1 = \frac{1}{4C} \cdot \frac{R_5}{R_4} \cdot \frac{\dfrac{1}{R_1} + \dfrac{1}{R_2} - \dfrac{1}{R_3}}{1 + R_c \left( \dfrac{1}{R_1} + \dfrac{1}{R_2} + \dfrac{1}{R_3} \right)}$$

(4)

$$F'_2 = \frac{1}{4C} \cdot \frac{R_5}{R_4} \cdot \frac{\dfrac{1}{R_1} - \dfrac{1}{R_2} - \dfrac{1}{R_3}}{1 + R_c \left( \dfrac{1}{R_1} + \dfrac{1}{R_2} + \dfrac{1}{R_3} \right)}$$

On peut remarquer que les fréquences $F_1$, $F_2$, $F'_1$, $F'_2$ sont indépendantes de la tension d'alimentation U du modulateur.

Entre ces quatre fréquences on a encore la relation qui traduit que l'excursion de fréquence est la même pour la voie haute que pour la voie basse, soit :

$$F_1 - F_2 = F'_1 - F'_2 \qquad (5)$$

Pour réaliser un modulateur universel devant fournir les fréquences ($F_1$, $F_2$) et ($F'_1$, $F'_2$) répondant à la condition (5), on peut par exemple se fixer les valeurs de la capacité C, du rapport de résistance $R_5/R_4$ et de la résistance $R_c$ et déterminer ensuite les valeurs des résistances $R_1$, $R_2$, $R_3$ à partir des relations (3), (4) et (5).

Par exemple, dans le cas du modulateur normalisé par le CCITT pour lequel :

$F_1 = 1\,850$ Hz    $F_2 = 1\,650$ Hz
$F'_1 = 1\,180$ Hz    $F'_2 = 980$ Hz,

on peut choisir :

$C = 2,7$ nF,   $R_5/R_4 = 2$,    $R_c = 93,10$ KΩ

et l'on calcule :

$R_1 = 9,150$ KΩ   $R_2 = 129,5$ KΩ   $R_3 = 38,65$ KΩ

Dans la pratique, si les différents composants du circuit ont les valeurs déterminées par le calcul, avec une précision de 1‰, le réglage en usine consistera seulement à régler une fréquence centrale, par exemple la fréquence centrale $F_0$ de la voie haute, en agissant sur l'une des résistances du rapport $R_5/R_4$. Ce réglage en usine étant effectué, on obtiendra en exploitation les fréquences désirées pour la voie haute ou pour la voie basse, simplement en agissant sur le circuit commutateur 14 ou sur un moyen équivalent. Si les composants du circuit ont les valeurs déterminées par le calcul avec une précision de 1 %, le réglage en usine consistera à régler, outre la fréquence centrale $F_0$ comme indiqué ci-dessus, le déplacement de fréquence $F_1 - F_2$ en agissant sur la résistance $R_2$, enfin l'écart $F_0 - F'_0$ entre les fréquences centrales des voies haute et basse en agissant sur la résistance $R_3$. En exploitation, on passera des fréquences de la voie haute à celles de la voie basse, comme on l'a indiqué ci-dessus.

On peut remarquer que l'utilisation dans le modulateur de l'invention de la résistance 16 de valeur $R_c$ connectée à l'entrée de l'amplificateur opérationnel 1, permet de diminuer les valeurs $R_1$, $R_2$, $R_3$ des résistances 7, 11 et 15. Si par exemple dans le modulateur normalisé par le CCITT, on n'utilise pas de résistance 16 ($R_c = 0$), avec $C = 2,7$ nF et $R_5/R_4 = 2$ comme ci-dessus, le calcul donne pour les résistances 7, 11 et 15 les valeurs $R_1 = 130,8$ KΩ $R_2 = 1\,851,5$ KΩ $R_3 = 552,7$ KΩ. Or on sait qu'il n'est pas favorable, pour la précision et la stabilité de la tension de sortie d'un amplificateur opérationnel, de connecter à son entrée des résistances ayant ces valeurs relativement élevées. Au contraire, l'utilisation d'une résistance $R_c$ permet de connecter à l'entrée de cet amplificateur un réseau de résistances ayant des valeurs beaucoup plus faibles, telles que celles indiquées plus haut.

Enfin, comme on l'a déjà indiqué, on améliore la stabilité des fréquences avec la température, si le circuit inverseur 5 et les circuits OU exclusif 9 et 13 sont réalisés dans la technologie CMOS. Les variations avec la température de la résistance de sortie de ces circuits sont pratiquement négligeables devant les valeurs indiquées plus haut pour les résistances $R_1$, $R_2$, $R_3$ connectées à leurs sorties.

**Revendications**

1. Modulateur destiné à transmettre des données par déplacement de fréquence et comportant un amplificateur opérationnel (1) monté avec un condensateur (2) pour former un circuit intégrateur dont la sortie (12) est connectée à une bascule à seuil (3, 5) avec hystérésis fournissant une tension bivalente ($V_i$) qui est appliquée à une borne d'une première résistance (7) dont l'autre borne (8) est à relier à une entrée dudit amplificateur opérationnel (1) de façon à former à la sortie (12) de ce dernier une tension triangulaire, des moyens logiques (9) étant prévus pour appliquer à une borne d'une deuxième résistance (11) dont l'autre borne est commune avec celle de la première résistance (7), une tension égale ou complémentaire à ladite tension bivalente ($V_i$), selon la valeur du signal de données ($V_D$), ce modulateur étant caractérisé en ce que, pour engendrer un premier ou un deuxième signal à fréquences centrales différentes et modulés avec le même déplacement de fréquence, il comporte d'autres moyens logiques (13) pour appliquer à une borne d'une troisième résistance (15) dont l'autre borne est commune avec la borne commune (8) de la première (7) et de la deuxième (11) résistance, une tension égale ou complémentaire à ladite tension bivalente ($V_i$), selon que le signal modulé désiré est le premier ou le deuxième signal, une résistance commune (16) étant insérée entre la borne commune (18) des trois résistances précitées et ladite entrée de l'amplificateur opérationnel (1).

2. Modulateur selon la revendication 1, caractérisé en ce que la bascule à seuil (3, 5) avec hystérésis est formée par un amplificateur opérationnel (3) suivi d'un circuit inverseur (5) fournissant ladite tension bivalente ($V_i$), une entrée de cet amplificateur opérationnel (3) étant connectée à la borne intermédiaire d'un pont de résistances (6, 4) connecté entre la sortie de l'amplificateur opérationnel (1) formant le circuit intégrateur et la sortie dudit circuit inverseur (5).

3. Modulateur selon la revendication 1 ou 2, caractérisé en ce que tous les circuits utilisés sont alimentés par une seule tension U et le potentiel appliqué sur l'autre entrée desdits amplificateurs opérationnels (1, 3) est égal à U/2.

4. Modulateur selon l'une des revendications 1 à 3, caractérisé en ce que tous les circuits utilisés sont réalisés en technologie CMOS.

### Claims

1. A modulator for data transmission by frequency shift modulation, comprising an operational amplifier (1) with an associated capacitor (2) connected so as to form an integrating circuit whose output (12) is connected to a bistable circuit (3, 5) having trigger hysteresis and producing a two level voltage ($V_i$) which is applied to one terminal of a first resistor (7) whose other terminal (8) is connected to an input of said operational amplifier (1) so as to produce a triangular voltage at its output (12), logic means (9) being provided to apply to one terminal of a second resistor (11), whose other terminal is connected to said other terminal of the first resistor (7), a voltage equal or complementary to said two-level voltage ($V_i$) depending on the value of a data signal ($V_D$) characterized in that for generating a first or a second signal having different central frequencies and being modulated with the same frequency shift, the modulator comprises further logic means (13) for applying to one terminal of a third resistor (15), whose other terminal is connected to the common connection point (8) of the first (7) and the second (11) resistors, a voltage equal or complementary to said two-level voltage ($V_i$), depending on whether the desired modulated signal is the first or the second signal, a common resistor (16) being connected between the common connection point (8) of said first, second and third resistors and said input of the operational amplifier (1).

2. A modulator as claimed in Claim 1, characterized in that the bistable circuit (3, 5) with trigger hysteresis is formed by an operational amplifier (3) followed by an inverting circuit (5) producing said two-level voltage ($V_i$), an input of this operational amplifier (3) being connected to the centre tap of a resistance bridge (6, 4) connected between the output of the operational amplifier (1) forming the integrating circuit and the output of said inverting circuit (5).

3. A modulator as claimed in Claim 1 or 2, characterized in that all circuits used are fed with a single voltage U and that the potential applied to the other input of said operational amplifier (1, 3) is equal to U/2.

4. A modulator as claimed in any of the Claims 1 to 3, characterized in that all circuits used are implemented in CMOS-technology.

### Ansprüche

1. Modulator zum Übertragen von Daten durch Frequenzverschiebung mit einem Operationsverstärker (1), der zusammen mit einem Kondensator (2) angeordnet ist zum Bilden eines Integrators, dessen Ausgang (12) mit einer Kippschaltung (3, 5) mit Schwellen-Hysterese verbunden ist, die eine zweiwertige Spannung ($V_i$) liefert, die einer Klemme eines ersten Widerstandes (7) zugeführt wird, dessen andere Klemme (8) mit einem Eingang des genannten Operationsverstärkers (1) derart verbunden ist dass am Ausgang (12) des letzteren eine Dreieckspannung gebildet wird, wobei logische Mittel (9) vorgesehen sind um einer Klemme eines zweiten Widerstandes (11), dessen andere Klemme mit der des ersten Widerstandes (7) verbunden ist, eine Spannung zuzuführen, die abhängig von dem Wert des Datensignals ($V_D$) der genannten zweiwertigen Spannung ($V_i$) entspricht bzw. komplementär dazu ist, dadurch gekennzeichnet, dass zum Erzeugen eines ersten oder eines zweiten Signals mit unterschiedlichen Zentralfrequenzen die mit derselben Frequenzverschiebung moduliert sind, der Modulator mit weiteren logischen Mitteln (13) versehen ist um einer Klemme eines dritten Widerstandes (15), dessen andere Klemme mit der gemeinsame Klemme (8) des ersten Widerstandes (7) und des zweiten Widerstandes (11) verbunden ist, eine Spannung zuzuführen, die der genannten zweiwertigen Spannung ($V_i$) entspricht bzw. komplementär dazu ist, je nachdem das gewünschte modulierte Signal das erste oder das zweite Signal ist, wobei zwischen der gemeinsamen Klemme (8) der drei obengenannten Widerstände und dem genannten Eingang des Operationsverstärkers (1) ein gemeinsamer Widerstand (16) geschaltet ist.

2. Modulator nach Anspruch 1, dadurch gekennzeichnet, dass die Kippschaltung (3,5) mit Schwellen-Hysterese durch einen Operationsverstärker (3) mit einer nachgeschalteten Umkehrschaltung (5) gebildet wird, die die genannte zweiwertige Spannung ($V_i$) liefert, wobei ein Eingang dieses Operationsverstärkers (3) mit der Mittelklemme einer Widerstandsbrücke (6, 4) verbunden ist, die zwischen dem Ausgang des den Integrator bildenden Operationsverstärkers (1) und dem Ausgang der genannten Umkehrschaltung (5) liegt.

3. Modulator nach Anspruch 1 oder 2, dadurch gekennzeichnet, dass alle verwendeten Schaltungsanordnungen durch eine einzige Spannung U gespeist werden und dass das Potential, das an den anderen Eingang der genannten Operationsverstärker (1, 3) angelegt wird, dem Wert U/2 entspricht.

4. Modulator nach einem der Ansprüche 1 bis 3, dadurch gekennzeichnet, dass alle verwendeten Schaltungsanordnungen in CMOS-Technik hergestellt sind.

FIG.1.

FIG.2.

1

FIG.3.

FIG.4.